# EUROPEAN PATENT APPLICATION

(11) **EP 2 475 074 A2**
(43) Date of publication of application: **11.07.2012**
(21) Application number: 10770697.0
(22) Date of filing: 03.09.2010
(51) Int. Cl.: H02K 1/14, H02K 1/16

(54) **STATOR LAMINATION OF AN ELECTRIC MOTOR**

(30) Priority: 04.09.2009 BR PI0903281
(71) Applicant: Whirlpool S.A., São Paulo - SP 04578-000 (BR)
(72) Inventor: KALLUF, Flávio, J., H., Joinville - SC Cep: 89203-074 (BR); JUNIOR, Landoaldo Victor, Lindroth, Joinville - SC Cep: 89216-280 (BR)
(74) Representative: Kopf, Korbinian Paul
(86) International application number: PCT/BR2010/000295
(87) International publication number: WO 2011/026209

(57) **Abstract**

The present invention refers to a stator blade (10) for an electric motor that comprises a central hole (20), a plurality of grooves (30) spaced around the hole (20), and a plurality of teeth (50) formed between two consecutive grooves (30). The corners (35a, 35b, 35c, 35d) formed between the edges of the groove (30e and 30a, 30e and 30b, 30b and 30d, and 30c and 30a) the rounding radiuses and the angles formed by these edges being acute angles. The teeth (50) present two side edges slanted together (50a, 50b) defined by the side edges (30b and 30a) of two consecutive grooves.

## Description

### Field of the Invention

The present invention refers to a stator blade and, more specifically, a blade for the stator of an electric motor of the kind used in a compressor of a refrigeration unit.

### Background of the Invention

In the refrigeration industry, compressors are generally driven by induction motors. This kind of electric motor comprises a mobile part, the rotor, and a static part, the stator. In the working of the motor, the stator generates a magnetic field that induces a current in the rotor, and the interaction between this induced current and the magnetic field generates a torque that moves the rotor.

As known by persons skilled in the art, the nucleus of the stators is formed by a stack of laminated plates (blades of the stator). Each of the blades has a central hole for accommodating the rotor and grooves distributed on the periphery of the hole to receive the wires that will form a coil made of conductive material. This is the coil that is responsible for creating the magnetic field.

With the objective of reducing energy consumption, some systems use electric motors of the brushless kind, with permanent magnets in the rotor. The use of the magnets enables an increase in efficiency compared to conventional induction motors, as it reduces losses in the rotor and, consequently, reduces the total consumption. In addition to this advantage, this kind of motor also has an electronic control that permits the variation of speed so as to adjust to the system's needs. This variation in speed significantly increases the thermo-dynamic efficiency of the refrigeration system, further reducing consumption.

The constant concern with the performance of the compressor and the refrigeration system makes the design of the electric motor a very important factor for the refrigeration industry. In point of fact, the design of the electric motor impacts energy consumption and the efficiency of the refrigeration system as a whole.

Hence, design and material options for the motor components are chosen in accordance with the desired performance parameters, focusing on efficiency, on torque and on the power consumed.

Along these lines, the design chosen for the blades of the stator directly impacts the generation of the magnetic field, influencing the efficiency and the torque achieved by the motor. Another factor that influences the magnetic field and the efficiency of the motor is the material used for the coil to fasten in the stator.

The most used material for this purpose is copper, it being highly conductive. However, for certain applications, the use of aluminum may present a significant reduction in cost without loss of efficiency.

Document US 3,942,055 describes a stator of a hermetic motor for use in compressors, the blades of which comprise grooves having three different sizes, allowing the assembly of three different types of windings, one of these windings being made of aluminum.

Document US 6,791,231 proposes a new stator blade design, wherein the central hole is widened and the grooves have a slightly funneled, closed end. The type of blade described in this document is ideal for two pole motors, of the kind used in ventilators for household use, the design being optimized for this application.

Although it is a common practice to design the stator in accordance with the performance required for the electric motor application, in the art there is still a question for a more efficient design that is capable of positively impacting the performance of the electric motor, allowing it to be applied in products with size restrictions and with a need for low energy consumption, as is the case, for example, of compressor motors used in the refrigeration industry.

### Objectives of the Invention

Therefore, it is an objective of the present invention to provide a stator blade that permits a certain degree of flexibility in the construction of a stator, enabling the use of copper wires or aluminum wires without altering the design of the plate.

It is another objective of the present invention to provide a stator blade that provides greater free space inside the grooves, allowing the use of a greater volume of conductive material.

It is a further objective of the present invention to provide a stator blade that provides greater space inside the grooves, enabling greater displacement of the coiling needle, and generating a more homogenous coil.

It is another objective of the present invention to provide a stator blade that provides a more homogenous distribution of the density of the magnetic flow along the blade teeth, avoiding the undesirable phenomenon of magnetic saturation, and increasing the efficiency of the motor.

It is yet another objective of the present invention to provide a stator blade that provides a balance between the losses in the steel and the losses in the conductor, providing better distribution of losses and, consequently, better performance of the motor.

### Summary of the Invention

The present invention achieves the above objectives by way of a stator blade for an electric motor that comprises:
a central hole,
a plurality of grooves spaced around the hole, the grooves and the hole being connected by means of passages or necks, and
a plurality of teeth, each tooth being formed between two consecutive grooves,
wherein:
the diameter of the central hole is about 50% of the total width of the blade;
the total area of the sum of the areas of each one of the grooves represents from 50% to 60% of the total area of a ring inscribed on the blade, the outer edge of the inscribed circle touching one of the edges of the blade and the inner edge of the inscribed circle coinciding with the edge of the central hole; and
the teeth are of variable width, being wide in the region near the central hole.

In a preferred embodiment of the blade of the present invention, each of the grooves has five edges, of which two are opposite side edges, two edges at the base of the groove and a parabolic edge, the edges of the base extending from the neck to the corresponding opposite side edge, the opposite side edges extending from one of the edges of the base to the parabolic edge, and the angle formed between each of the side edges and the parabolic edge being an acute angle comprised between 85° and 89°.

Still in the preferred embodiment, the corners formed between the edges of the groove have a maximum radius equal to about 0.25mm, the distance between the top of the groove and the edge of the central hole is comprised between 78% and 82% of the distance between the base of the neck and the outer edge of the circle inscribed on the blade, and the angle formed between the parabolic edge of the grooves and the horizontal axis is comprised between 0° and 5°.

### Summary Description of the Drawings

The figures show:
Figure 1 - Figure 1 illustrates a plan view of a stator blade known in the prior art;
Figure 2 - Figure 2 illustrates a detailed view of one of the grooves of the stator blade known in the prior art;
Figure 3 - Figure 3 schematically illustrates the distribution of the density of the magnetic flow along one of the teeth of the stator blade known in the prior art;
Figure 4 - Figure 4 illustrates a plan view of a stator blade according to the present invention;
Figure 5 - Figure 5 illustrates a detailed view of one of the grooves according to the present invention;
Figure 6 - Figure 6 schematically illustrates the distribution of the density of the magnetic flow along one of the teeth of the stator blade according to the present invention;
Figure 7 - Figure 7 illustrates a plan view of a stator blade according to the present invention, a ring area inscribed on the blade being highlighted;
Figure 8 - Figure 8 illustrates one of the grooves of the stator blade according to the present invention, the angle formed between the side edges and the upper edge of the grooves being highlighted;
Figure 9 - Figure 9 illustrates a plan view of the stator blade according to the present invention, the areas of the groove and ring inscribed in the blade being highlighted; and
Figure 10 - Figure 10 illustrates one of the grooves of the stator blade according to the present invention, the angle formed between the upper edges of the groove and the horizontal axis being highlighted.

### Detailed Description of the Invention

The present invention will now be described in detail based on the examples of execution represented in the drawings.

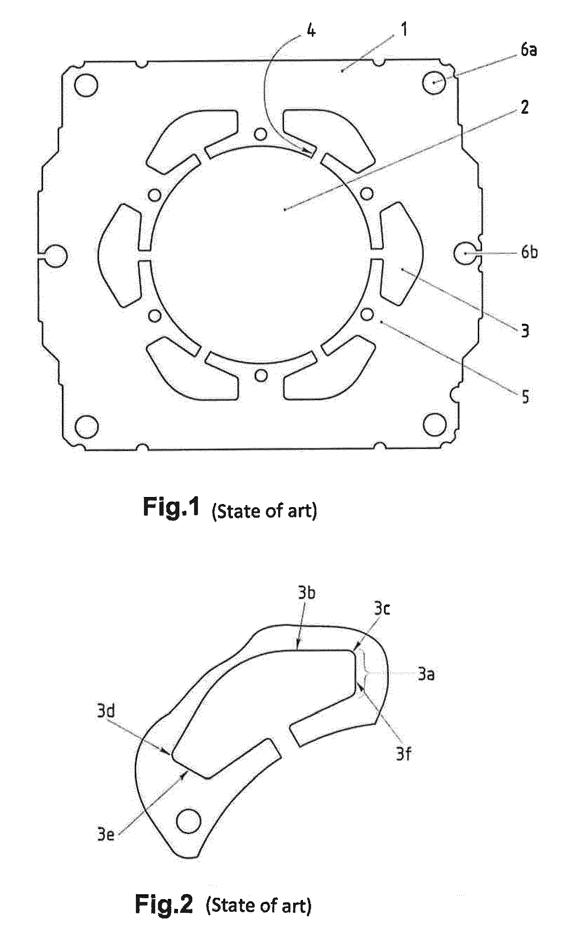

Figure 1 illustrates a stator blade 1 typical of electric motors for compressors. The blade 1 comprises a central hole 2 and a plurality of grooves 3 spaced around the hole 2. In this type of blade, the diameter of the central hole is about 55 millimeters.

The grooves 3 and the hole 2 are connected by means of passages or necks 4. Between two consecutive grooves 3 there is formed a tooth 5, and the inner edges of the teeth 5 form the edge of the central hole 2.

As better illustrated in figure 2, each of the grooves 3 is shaped like a sailor's hat, with a lower part 3 in the shape of an inverted trapezium 3a whose upper edge has the shape of a parabolic dome 3b. The connection between the edges of the trapezium and dome (that is, between the sides and the upper edge of the groove 3) occurs with curved edges 3c, 3d with a radius of 1.0mm. The two side walls of the inverted trapezium 3a (walls 3e and 3f) are slanted together at an angle of 60°, and the distance between the top of the parabolic dome 3b and the base of the inverted trapezium is about 10.0mm. Therefore, the total area of each groove 3 is about 83mm².

When the stator is assembled, the inner edges of the grooves 3 receive a coating of insulator, generally in the form of flexible tapes mounted after the stacking of the blades.

The teeth 5 have two parallel edges 5a, 5b defined by the side edges of two consecutive grooves and an auxiliary hole 6 the function of which is to fasten the insulating cover, responsible for the electric insulation between the package of blades and the coil heads.

The blade 1 also has 6 fastening holes, there being four holes 6a on each of the corners of the blade and two holes 6b at median points of two edges opposite the blade. The purpose of these holes is to accommodate the fastening bolts of the stator. Fastening occurs only in three of these holes, however, since half of the package is turned during the manufacturing process to compensate for the height imbalance, so 6 holes along the periphery of the stator are needed.

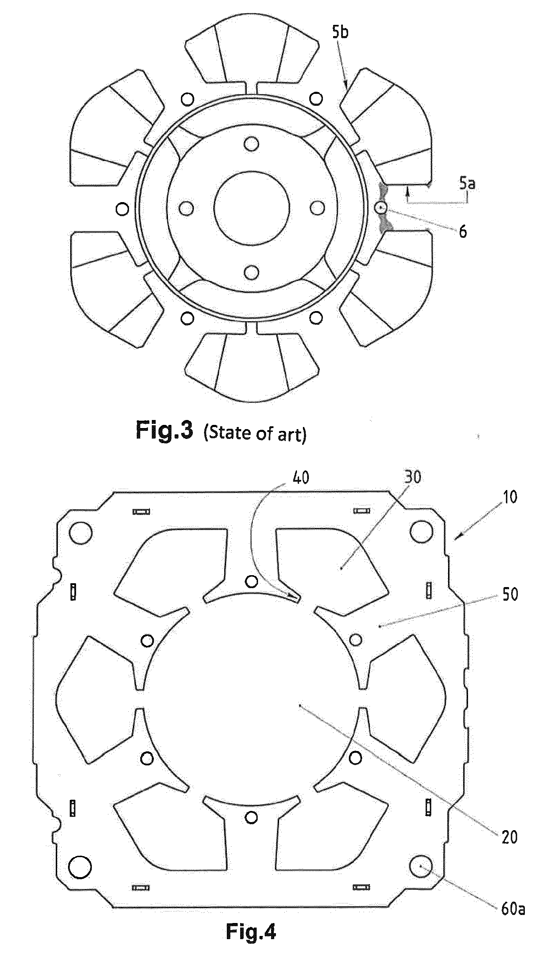

Although this prior art blade design has been widely used in stators of electric motors of the brushless kind with permanent magnets, it has some drawbacks:
- although the shape and sizes of the grooves 3 are suitably designed to form the copper wire coil, they become unsuitable when opting to use another type of wire such as, for example, aluminum wire, since to obtain a performance equivalent to that of copper, an increase of at least 60% in the transversal area of the conductor is required (and, consequently, an increase of equal magnitude in the groove area);
- the rounded corners on the inner edge of the grooves do not permit efficient anchorage of the groove insulator, creating an empty space between the inner edges and the insulator. Since this space is used neither as a flow passage area (body of the blade), nor as a groove area (space for the conductor), it limits the maximum efficiency of the motor, reduces its power range and causes an increase in the flow density; and
- the shape of the teeth 5 facilitates the accumulation of magnetic flow in the region adjacent to the auxiliary hole 6, which may cause magnetic saturation and consequent drop in efficiency. In this sense, figure 3 shows a schematic representation of the magnetic saturation region which is formed in the blades of the prior art.

Figures 4 to 10 show a blade 10 according to the present invention. The blade 10 of the present invention has an optimized design, which allows the construction of a stator that when using copper wire coil presents a superior performance to that found in stators of the state of the art and that, at the same time, is suitable for coiling with aluminum wires.

As known by persons skilled in the art, aluminum is a cheaper material than copper per unit of weight. However, so that the performance of a motor using aluminum can be comparable to that of a motor with copper conductors, there must be an increase of at least 60% in the transversal area of the conductor, as stated previously.

Hence, the blade of the present invention has grooves with a shape and size arranged so as to present an increase in area of the groove and to facilitate the passage and insertion of the coiling needle.

The blade 10 comprises a central hole 20 and a plurality of grooves 30 spaced around the hole 20 (in the preferred arrangement of the invention, there are six grooves spaced homogeneously around the central hole 20). The diameter of the central hole is about 50% of the total width of the blade. The grooves 30 and the hole 20 are connected by means of passages or necks 40. Between two consecutive grooves 30 there is formed a tooth 50, while the inner edges of the teeth 50 form the edge of the central hole 20.

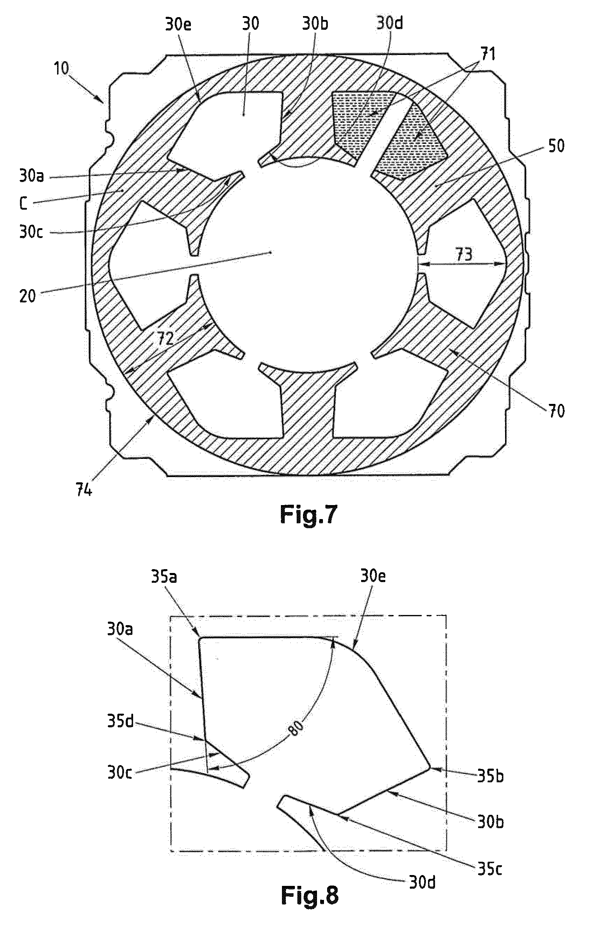

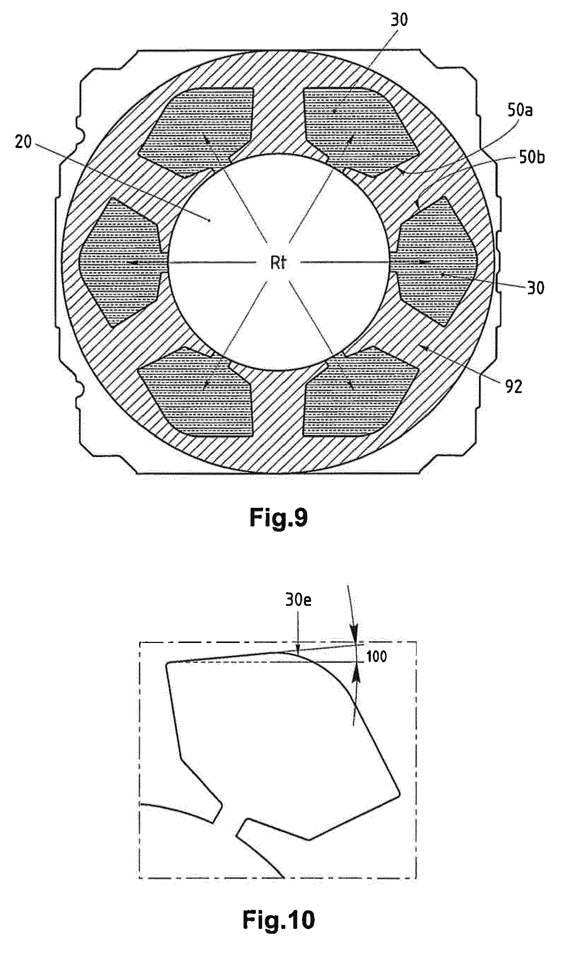

As better illustrated in figures 7 and 9, it is possible to highlight a ring area C inscribed in the blade, and the outer edge of this ring touches two of the edges of the blade and the inner edge coincides with the edge of the central hole 20. Preferably, the total area R of the grooves 30 should be comprised between 50% and 60% of the total area C of the ring inscribed in the blade, so as to guarantee the possibility of balance of Joule losses in the conductors and in the blade material, whereby increasing the performance of the motor.

The increase in area of the groove confers the blade of the present invention flexibility for the material that forms the coil, as it is suitable for the use of copper and for the use of aluminum. When opting to use copper, there is a possibility of significant gain in efficiency of the motor when compared to the motor that uses a stator with the blade 1 of the prior art. When opting to use aluminum, a significant reduction in total cost of the motor is obtained compared to the motor of the prior art with copper conductors.

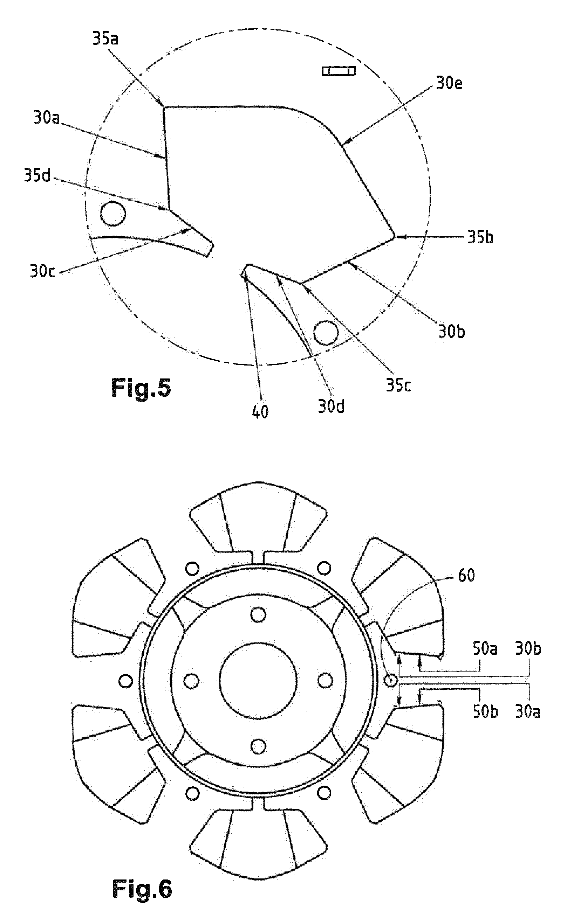

Figures 5, 8 and 10 show the geometry of each of the grooves 30 in greater detail.

Each one of the grooves 30 has five edges 30a, 30b, 30c, 30d e 30e, of which two are opposite side edges 30a and 30b, two are slanted end edges 30c and 30d and a parabolic edge 30e. Each of the slanted end edges 30c or 30d extends from the neck 40 to the corresponding opposite side edge 30a or 30b and each of the opposite side edges extends from one of the end edges 30c or 30d up to the parabolic edge 30e.

As can be seen better in figure 7, the two opposite side edges 30a and 30b are slanted together at an angle comprised between 60° and 70°, and the distance 73 between the top of the parabolic edge 30e and the edge of the hole 20 (see figure 7) should be comprised between 78% and 82% of the distance 72 between the edge of the hole 20 (inner end of the neck 40) and the outer edge in the inscribed circle C.

As better visualized in figure 8, the angles formed between the walls 30a and 30e and between 30b and 30e are acute angles (<90°), whereby forming an opening angle 80 of the teeth 50 so as to facilitate the fastening of the groove insulator and reduce the flow density in the teeth. Preferably, the angle 80 is between 85° and 89°. Additionally, in the preferred embodiment, the corners 35a, 35b, 35c, 35d formed between the walls 30e and 30a, 30e and 30b, 30b and 30d, and 30a and 30c should have a maximum rounding radius of 0.50mm.

The advantage of forming acute angles in the groove 30 of the blade 10 of the present invention, enabling better anchorage of the insulator on the inner walls of the grooves during the formation of the stator is extremely relevant to obtain a maximum volume of conductive material: by guaranteeing better adherence of the insulator on the inner edges of the grooves, a greater free space inside the grooves is obtained, and said space is occupied by the conductive material during coiling.

The teeth 50 have two side edges slanted together (not parallel) 50a, 50b defined by the side edges of two consecutive grooves. Therefore, in the present invention, as the teeth 50 are of variable width, being wider in the region near the central hole 20.

Additionally, the teeth 50 may comprise an auxiliary hole 60 the function of which is to fasten the insulating cover (insulation between the coil head and the package of blades).

As shown in the schematic illustration present in figure 6, the slanting between the two side edges 50a, 50b of the tooth 50 was introduced to avoid the accumulation of the flow in the region adjacent to the hole 60, allowing the obtainment of a flow density approximately homogeneous along the entire tooth 50.

The blade of the present invention also has four fastening holes 60a in each corner of the blade. The purpose of these holes is to fasten the stator to the compressor block.

As shown in the schematic illustration in figure 10, the angle 100 formed between the edge 30e and the horizontal axis should be between 0° and 5°, so as to facilitate the displacement of the coiling needle and generate a uniformly distributed coil.

It should be understood that the description provided based on the above figures refers only to possible embodiments for the blade of the present invention, and the true scope of the object of the invention is defined in the accompanying claims.

## Claims

1. Stator blade (10) for an electric motor comprising:
a central hole (20),
a plurality of grooves (30) spaced around the hole (20), the grooves (30) and the hole (20) being connected by means of passages or necks (40), and
a plurality of teeth (50), each of the teeth (50) being formed between two consecutive grooves (30),
CHARACTERIZED wherein:
the diameter of the central hole (20) is about 50% of the total width of the blade;
the total area (Rt) of the sum of the areas of each of the grooves (30) represents from 50% to 60% of the total area (C) of a ring inscribed on the blade (10), the outer edge of the inscribed ring touching one of the edges of the blade (10) and the inner edge of the inscribed ring coinciding with the edge of the central hole (20); and
the teeth (50) are of variable width, being wider in the region near the central hole (20).

2. Stator blade (10), according to claim 1, CHARACTERIZED wherein:
each of the grooves (30) has five edges (30a, 30b, 30c, 30d, 30e), of which two are opposite side edges (30a and 30b), two edges at the base of the groove (30c and 30d) and a parabolic edge (30e);
each one of the edges of the base of the groove (30c or 30d) extends from the neck (40) to the corresponding opposite side edge (30a or 30b);
each one of the opposite side edges (30a and 30b) extends from one of the base edges (30c or 30d) up to the parabolic edge (30e); and
the angle (80) formed between each one of the side edges (30a, 30b) and the parabolic edge (30e) is an acute angle comprised between 85° and 89°.

3. Blade, according to claim 2, CHARACTERIZED wherein the corners (35a, 35b, 35c, 35d) formed between the edges of the groove (30e and 30a, 30e and 30b, 30b and 30d, and 30c and 30a) have a maximum radius equal to about 0.50mm.

4. Blade, according to claim 2 or 3, CHARACTERIZED wherein the distance (73) between the top of the groove (30) and the edge of the central hole (20) is comprised between 78% and 82% of the distance (72) between the base of the neck (40) and the outer edge of the circle (C) inscribed on the blade (10).

5. Blade, according to any of claims 2 to 4, CHARACTERIZED wherein the angle (100) formed between the parabolic edge (30e) of the grooves (30) and the horizontal axis is comprised between 0° and 5°.
